# FASCICULE DE BREVET EUROPEEN

(11) **EP 1 335 870 B1**
(45) Date de publication et mention de la délivrance du brevet: **12.04.2006**
(21) Numéro de dépôt: 01982580.1
(22) Date de dépôt: 30.10.2001
(51) Int. Cl.: B65G 47/14, B65G 47/256

(54) **SYSTEME D'ALIMENTATION DE PREFORMES DESTINE NOTAMMENT A UNE MACHINE DE SOUFFLAGE DE RECIPIENTS**
ZUFUHRSYSTEM FÜR VORFORMEN INSBESONDERE GEEIGNET FÜR EINE BEHÄLTER BLASMASCHINE
SYSTEM FOR SUPPLYING PREFORMS IN PARTICULAR FOR A CONTAINER BLOWING MACHINE

(30) Priorité: 03.11.2000 FR 0014151
(43) Date de publication de la demande: 20.08.2003
(73) Titulaire: SIDEL, 76053 Le Havre Cedex (FR)
(72) Inventeur: CHARPENTIER, Alain c/o SIDEL, F-76053 LE HAVRE Cedex (FR)
(86) Numéro de dépôt international: PCT/FR2001/003363
(87) Numéro de publication internationale: WO 2002/036466

(56) Documents cités:
- EP-A- 0 511 048
- US-A- 4 223 778

## Description

L'invention se rapporte au domaine des systèmes de démêlage et d'alignement de préformes, ces systèmes étant par exemple destinés à alimenter en préformes des machines de soufflage de récipients.

Le système sera plus particulièrement décrit dans le cadre de sa mise en oeuvre dans une installation de soufflage de récipients en polyéthylène téréphtalate (PET).

En effet, selon une technique connue, de tels récipients sont produits en deux étapes. Dans une première étape, on procède au moulage par injection d'une préforme en PET. Cette préforme comporte un corps sensiblement tubulaire qui est fermé à l'une de ses extrémités axiales. Son autre extrémité présente, dès cette opération de moulage par injection, la forme définitive du col du récipient. Généralement, le col du récipient comporte un filetage et, à sa base, une collerette de support annulaire qui s'étend radialement vers l'extérieur.

Il existe des machines dans lesquelles les préformes, une fois injectées, sont directement transmises vers la machine de soufflage, le transport des préformes étant effectué de manière positive, c'est-à-dire dire que chaque préforme est prise en charge individuellement.

Toutefois, dans de nombreux cas, les préformes sont fabriquées par injection en un premier endroit et sont moulées par soufflage à la forme définitive du récipient en un second endroit sur une machine de soufflage spécifique. Une telle technologie permet de procéder à l'opération de moulage par soufflage le plus près possible du lieu d'embouteillage, l'opération d'injection pouvant être effectuée en n'importe quel endroit. En effet, il est relativement aisé et peu coûteux de transporter des préformes, tandis que transporter des récipients après soufflage présente l'inconvénient d'être économiquement peu rentable du fait du volume très important des récipients.

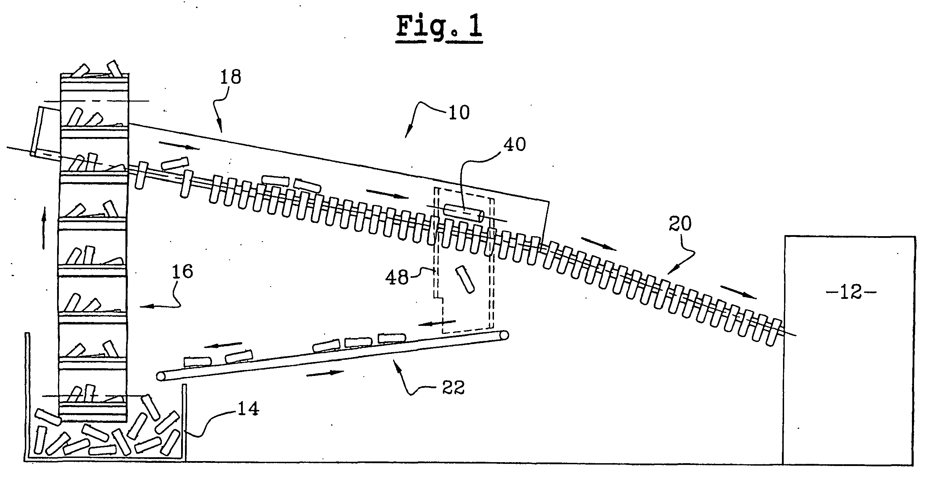

Dans le cas où la machine d'injection et la machine de soufflage sont deux machines totalement indépendantes, la machine de soufflage dispose d'un système de démêlage et d'alignement des préformes du type de celui illustré à la figure 1.

Dans un tel système, les préformes sont déversées en vrac dans un bac. Elles sont prélevées de ce bac par un tapis élévateur qui, à son tour, vient déverser les préformes, selon un rythme pré-établi, à l'extrémité supérieure d'une trémie d'alignement. Cette trémie d'alignement comporte généralement deux rouleaux d'alignement qui sont inclinés par rapport à l'horizontale et qui sont sensiblement parallèles l'un à l'autre. Les deux rouleaux sont entraînés en rotation selon des sens opposés, et sont écartés l'un de l'autre de manière à laisser subsister entre les deux rouleaux un intervalle, le long des deux rouleaux, qui est de dimension légèrement supérieure à la dimension du corps des préformes. Au contraire, l'écartement des deux rouleaux d'alignement est tel que l'espace transversal entre les deux rouleaux est inférieur à la dimension de la collerette de support située à la base du col.

La trémie est configurée de telle manière que, sous l'effet de la gravité, les préformes sont forcées vers le fond de la trémie où se trouvent les deux rouleaux. Ainsi, par simple gravité, chaque préforme tend à se disposer dans la trémie, entre les deux rouleaux, de manière à être retenue en appui par sa collerette sur les rouleaux tout en ayant le corps pendant vers le bas entre les deux rouleaux. Le mouvement de rotation des rouleaux et leur inclinaison assure d'une part le placement des préformes les unes derrière les autres, dans la position préférentielle décrite plus haut, et d'autre part le glissement des préformes le long de l'axe des rouleaux, vers le bas de la trémie d'alimentation où elles sont récupérées dans un rail d'alimentation lui-même relié à la machine de soufflage. Dans le rail d'alimentation, les préformes s'accumulent en une file continue.

Toutefois, du fait que les préformes sont déversées en vrac dans la trémie, et du fait du caractère aléatoire du placement des préformes, certaines d'entre elles arrivent au bas de la trémie sans avoir pu se positionner correctement entre les deux rouleaux. Bien entendu, de telles préformes ne peuvent pas être introduites dans le rail d'alimentation qui conduit vers la machine. Il en est de même des préformes emboîtées l'une dans l'autre, même dans le cas où la préforme inférieure est correctement orientée.

Selon l'art antérieur, la trémie d'alimentation possède, au voisinage de son extrémité inférieure, une roue de refoulement qui est munie de pales. Cette roue est rotative autour d'un axe perpendiculaire à l'axe des rouleaux d'alignement et les pales de cette roue de refoulement sont destinées à balayer l'espace de la trémie situé au-dessus des rouleaux de manière à repousser vers l'amont toute préforme qui ne serait pas correctement positionnée entre les rouleaux. Le principe de cette roue de refoulement est que, de manière statistique, les préformes parviennent à se positionner correctement après un certain nombre de refoulements.

Eventuellement, on peut prévoir des orifices d'évacuation qui, en cas de trop-plein de préformes mal disposées, permettent d'évacuer les préformes, soit vers un bac de récupération, soit directement vers le premier bac de stockage.

De tels systèmes sont couramment utilisés et donnent entièrement satisfaction dans de nombreux cas.

Toutefois, lorsqu'il s'agit d'alimenter des machines à très hautes cadences, par exemple des machines capables de souffler plus de 40.000 récipients par heure, les systèmes de démêlage et d'alignement classiques présentent parfois des disfonctionnements, surtout lorsque les préformes présentent un col de diamètre important. Dans ce cas, étant donné la vitesse de défilement des préformes dans la trémie d'alimentation, il arrive que les préformes refoulées vers l'amont par la roue de refoulement ne parviennent jamais à se positionner correctement entre les rouleaux, ce qui finit par occasionner des bourrages qui peuvent conduire à un arrêt de l'alimentation des préformes, et donc à un arrêt de la machine de soufflage du fait d'un manque de préformes.

Bien entendu, de tels arrêts ne sont pas souhaitables étant donné qu'ils peuvent entraîner l'arrêt de la ligne d'embouteillage située en aval de la machine de soufflage.

Le document EP 0 511 048 A1 décrit un dispositif qui permet de résoudre partiellement les problèmes posés par l'art antérieur, en apportant une solution à l'élimination des préformes emboîtées, qu'elles soient couchées ou debout, mais ne permet pas de résoudre les problèmes induits par les préformes mal alignées, c'est-à-dire couchées sans être emboîtées.

L'invention a donc pour but de proposer une nouvelle conception d'un système d'alimentation de préformes qui permette de fiabiliser ces systèmes, notamment dans le cas des systèmes destinés aux machines à hautes cadences, en leur adjoignant un dispositif simple pour résoudre l'ensemble des problèmes rencontrés dans les dispositifs existant jusqu'alors.

Dans ce but, l'invention propose donc un système d'alimentation de préformes comportant un corps et un col qui est de diamètre supérieur au corps de la préforme, du type comportant une trémie de démêlage et d'alignement qui est inclinée par rapport à l'horizontale et au fond de laquelle sont disposés deux rouleaux d'alignement parallèles entraînés en rotation autour de leur axe respectif, du type dans lequel les rouleaux d'alignement sont écartés l'un de l'autre d'une distance supérieure au diamètre du corps mais inférieure au diamètre du col des préformes de manière que, par gravité, les préformes puissent s'orienter verticalement col en haut, le col étant en appui sur les rouleaux d'alignement et le corps plongeant dans l'espace entre les deux rouleaux, et du type dans lequel les préformes sont déversées en vrac à l'extrémité supérieure de la trémie et sont récupérées à l'extrémité inférieure de la trémie une fois alignées et orientées entre les deux rouleaux, caractérisé en ce que la trémie comporte au moins une roue d'éjection des préformes mal orientées qui est entraînée en rotation autour de son axe, lequel est incliné par rapport à une perpendiculaire à la direction des axes de rouleaux d'alignement de manière à balayer les préformes mal alignées ou emboîtées et à les éjecter directement vers un orifice latéral d'évacuation de la trémie.

Selon d'autres caractéristiques de l'invention :
- la roue d'éjection balaie un espace de la trémie situé au-dessus des rouleaux de manière à ne pas entrer en contact avec des préformes correctement alignées et orientées entre les rouleaux d'alignement ;
- la roue d'éjection comporte des éléments radiaux souples qui sont destinés à venir au contact des préformes mal alignées ou emboîtées ;
- les éléments radiaux souples sont des pales radiales en matériau souple ;
- les éléments radiaux souples sont des filaments ;
- l'axe de la roue d'éjection est disposé de manière à former un angle sensiblement compris entre 20 et 75° par rapport à la perpendiculaire à la direction des axes des rouleaux d'alignement ;
- la roue d'éjection s'étend sur une longueur telle qu'elle balaie transversalement sensiblement toute la largeur couverte par les deux rouleaux ;
- l'axe de la roue d'éjection est disposé de manière à former un angle sensiblement égal à 90° par rapport à la perpendiculaire à la direction des axes des rouleaux d'alignement ;
- le système comporte deux roues d'éjection qui sont décalées axialement l'une par rapport à l'autre dans le sens des axes des rouleaux ;
- la trémie comporte deux orifices latéraux d'éjection dont chacun est associé à une des roues ;
- les axes des deux roues sont sensiblement parallèles et sont décalés transversalement l'un par rapport à l'autre ;
- le système comporte des moyens d'ajustement en hauteur de la roue d'éjection ;
- le système comporte un bac de stockage depuis lequel les préformes sont prélevées pour être déversées dans la trémie, et l'orifice latéral d'évacuation de la trémie est relié au bac de stockage par un dispositif de recirculation des préformes qui ramène les préformes éjectées vers le bac de stockage.

D'autres caractéristiques et avantages de l'invention apparaîtront à la lecture de la description détaillée qui suit ainsi qu'au vu des dessins dans lesquels :
- la figure 1 est une vue schématique de côté d'un système de démêlage conforme aux enseignements de l'invention ;
- la figure 2 est une vue schématique en perspective illustrant plus particulièrement un premier mode de réalisation d'une trémie de démêlage munie de la roue d'éjection selon l'invention ;
- la figure 3 est une vue schématique en coupe de la trémie de démêlage de la figure 2 ;
- la figure 4 est une vue de dessus de la roue d'éjection de la figure 2 ;
- les figures 5 et 6 sont des vues similaires à celles des figures 3 et 4 illustrant un second mode de réalisation de l'invention.

On a illustré sur la figure 1 de manière très schématique un système 10 d'alimentation de préformes destiné par exemple à alimenter en préformes une machine de soufflage 12. Le système d'alimentation comporte tout d'abord un bac de stockage 14 dans lequel les préformes sont stockées en vrac. Un élévateur 16 permet de prélever les préformes dans le bac de stockage 14 pour les déverser à l'extrémité supérieure d'une trémie d'alimentation 18. Dans la trémie 18, les préformes sont orientées col en haut et sont alignées en une file de manière à être ensuite délivrées à un rail d'alimentation 20 qui transporte les préformes jusqu'à la machine de soufflage 12.

Un tapis de recirculation 22 permet de récupérer des préformes éjectées depuis un orifice latéral 24 agencé près de l'extrémité inférieure de la trémie 18 pourra ramener les préformes éjectées jusqu'au bac de stockage 14.

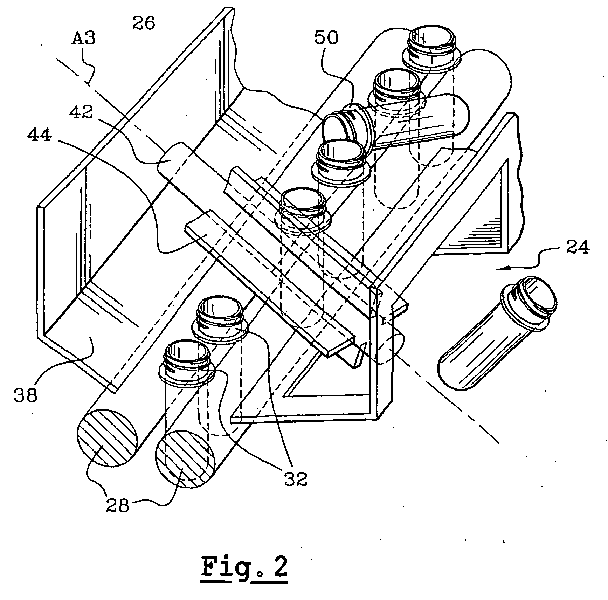

Un premier mode de réalisation d'une trémie d'alimentation 18 selon l'invention est représenté de manière parcellaire sur les figures 2 à 4. De manière connue, cette trémie 18 est composée d'un caisson comportant par exemple deux parois latérales verticales 26. Le fond du caisson est formé par deux rouleaux 28 d'axes sensiblement parallèles A1 et A2 qui s'étendent sensiblement sur toute la longueur du caisson. Les axes A1 et A2 sont inclinés par rapport à l'horizontale d'une pente correspondant à la pente d'inclinaison de la trémie d'alimentation. Ces deux axes A1 et A2 peuvent être réglés de manière à présenter entre eux quelques minutes d'angle ou quelques degrés d'angle.

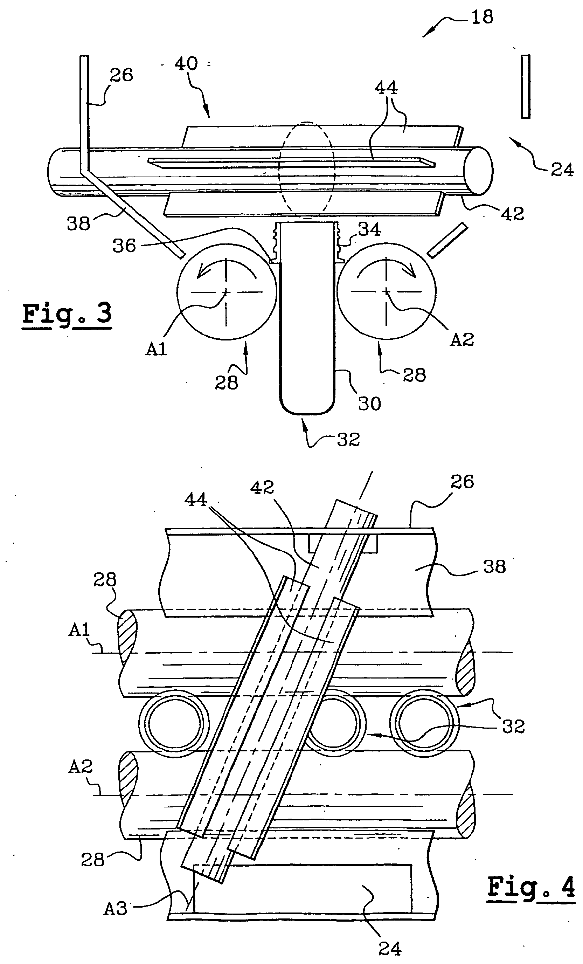

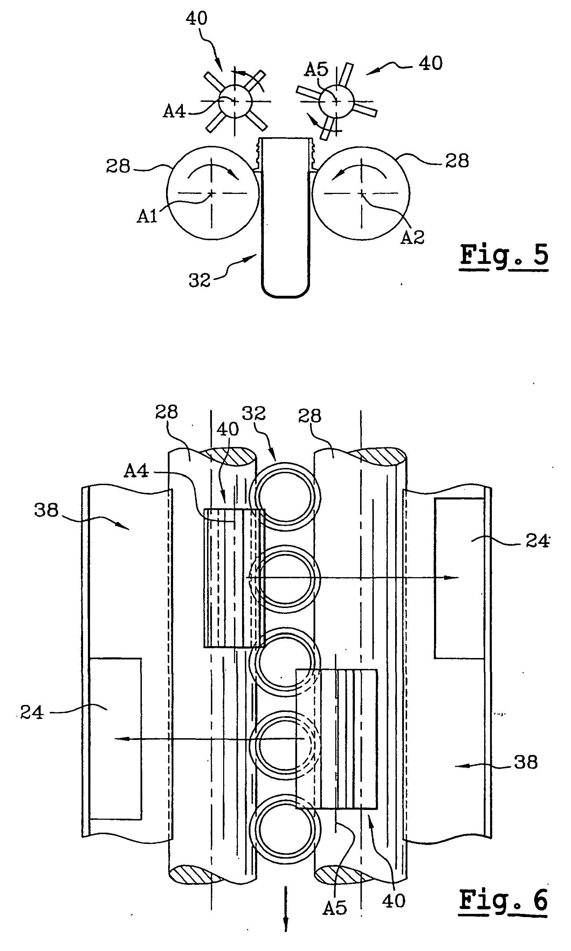

Comme on peut le voir sur les figures 3 et 5, les deux rouleaux 28 sont écartés l'un de l'autre de manière à laisser subsister entre eux un espace dont la dimension transversale est légèrement supérieure au diamètre du corps 30 de la préforme 32. Toutefois, on voit que la préforme 32 comporte un col 34 qui est muni à sa base d'une collerette radiale externe 36 dont le diamètre est supérieur à la dimension transversale de l'espace séparant les deux rouleaux 28. De la sorte, lorsqu'une préforme se présente sur les rouleaux 28, son corps 30 peut plonger dans l'espace entre les deux rouleaux 28 mais elle se trouve alors retenue par la collerette 26 dans une position verticale col en haut. Pour favoriser le bon positionnement de la préforme 32, chaque rouleau 28 est animé d'un mouvement de rotation autour de son axe respectif A1 ou A2. Les deux rouleaux tournent en sens inverse l'un de l'autre, soit dans le sens indiqué sur les figures, soit chacun dans le sens contraire.

Pour s'assurer que toutes les préformes déversées dans la trémie viennent au contact des rouleaux 28, on peut voir que la partie inférieure des parois latérales 26 du caisson est formée par des pans inclinés 38 qui ramènent toutes les préformes vers le centre de la trémie, sur les rouleaux 28.

Conformément aux enseignements de l'invention, et ainsi que cela est illustré sur la figure 1, la trémie d'alimentation 18 est équipée d'une roue d'éjection 40 qui permet d'évacuer les préformes qui, en arrivant près de l'extrémité inférieure de la trémie 18, n'ont pas été orientées et alignées entre les deux rouleaux.

Selon l'invention, cette roue d'éjection 40 comporte pour l'essentiel un arbre central 42 qui s'étend dans un plan parallèle au plan défini par les deux axes A1 et A2 des deux rouleaux d'alignement 28, verticalement au-dessus de ce plan. Selon une caractéristique essentielle de l'invention, l'axe A3 de l'arbre central 42 de la roue d'éjection 40 est incliné par rapport à une perpendiculaire à la direction des axes A1 et A2. Dans l'exemple de réalisations des figures 2 à 4, cette inclinaison est de l'ordre de 45° mais, en fonction de la vitesse de défilement des préformes dans la trémie, c'est à dire en fonction de la géométrie et de la cadence d'alimentation du système, cet angle pourra varier par exemple entre 20 et 75°. Dans l'exemple de réalisation des figures 5 et 6 qui sera décrit plus en détail plus bas, la trémie comporte deux roues d'éjection 24 dont les axes respectifs A4 et A5 forment un angle d'environ 90° avec la perpendiculaires aux axes A1 et A2, de sorte que les axes A4 et A5 sont sensiblement parallèles aux axes A1 et A2.

Dans l'exemple de réalisation des figures 2 à 4, l'arbre 42 est relié à un système (non représenté) d'entraînement en rotation autour de son axe A3 qui l'entraîne à une vitesse de l'ordre par exemple de 250 tours par minute. Ce système d'entraînement peut être un moteur indépendant, mais on peut aussi prévoir que la roue d'éjection soit entraînée par les rouleaux d'alignement par l'intermédiaire d'un dispositif de transmission, par exemple par un dispositif à courroie.

L'arbre 42 est muni de pales radiales 44, qui sont en l'occurrence au nombre de quatre réparties angulairement de manière régulière autour de l'axe A3, et qui sont par exemple réalisées en matière élastomère souple. Les pales 44 s'étendent le long de l'axe A3 de manière à balayer, lorsque la roue d'éjection 40 est entraînée en rotation autour de son axe A3, sensiblement tout l'espace transversal situé au-dessus des rouleaux 28 dans la trémie 18. Les pales pourraient être remplacées par des filaments radiaux souples, la roue d'éjection prenant alors la forme d'une brosse rotative.

En regard de la roue d'éjection 40, la trémie d'alimentation 18 comporte au moins un orifice latéral 24 disposé à la hauteur de la roue d'éjection, en amont de celle-ci par rapport au sens de défilement des préformes. La dimension longitudinale de l'orifice d'éjection 24 sera choisie notamment en fonction de l'angle formé entre l'axe A3 et la direction des axes A1 et A2, ceci afin de s'assurer qu'une préforme éjectée par la roue 40 soit directement éjectée en direction de l'orifice 24. Comme on peut le voir sur la figure 1, l'orifice d'évacuation 24 est associé à un guide d'évacuation 48 qui permet aux préformes éjectées de retomber sur le tapis de recirculation 22.

Le positionnement vertical de la roue 40 et la dimension radiale des pales 44 sont choisis pour que la roue 40, entraînée en rotation autour de son axe A3, balaye l'espace situé immédiatement au-dessus des rouleaux 28 sans venir au contact de préformes qui seraient correctement orientées entre les deux rouleaux 28. Ainsi, on voit que, sur la figure 3, le col 34 d'une préforme correctement orientée passe sous la roue d'éjection 40, sans être touchée par celle-ci. Au contraire, on voit sur la figure 2 qu'une préforme 50 mal orientée, par exemple reposant à l'horizontale sur les deux rouleaux et descendant avec le flot des préformes correctement orientées, sera inévitablement balayée par la roue d'éjection 40 et projetée directement vers l'orifice latéral d'évacuation 24. Bien entendu, on pourra prévoir un dispositif (non représenté) de réglage de la position verticale des rouleaux 28 pour adapter cette position à la géométrie des préformes.

Dans l'exemple de réalisation illustré aux figures 5 et 6, la trémie d'alimentation 18 comporte deux roues d'éjection 40, dont les axes A4 et A5 sont sensiblement parallèles à la direction des axes A1 et A2 des rouleaux 28. Comme on peut le voir sur la figure 6, les deux roues d'éjection 40 sont décalées axialement selon la direction des rouleaux 28. L'une des roues se trouve donc en amont de l'autre. Dans ce cas, la trémie 18 comporte deux orifices latéraux d'éjection 24, qui seront bien entendu de préférence associés à un système de recirculation des préformes. Chacune des fenêtres d'éjection 24 est agencée en regard de la roue d'éjection associée.

Dans ce mode de réalisation, les axes A4 et A5 sont parallèles, mais ils ne sont pas confondus de sorte que les deux roues d'éjection 40 sont décalées transversalement l'une par rapport à l'autre. En effet, on peut voir que l'une des roues 40 est associée à l'un des rouleaux 28 car elle se situe sensiblement au-dessus de ce rouleau tandis que l'autre des roues d'éjection 24 est associée au second rouleau 28 en se situant sensiblement au-dessus de ce second rouleau. Dans l'exemple illustré, l'axe des roues d'éjection n'est pas directement à l'aplomb de l'axe du rouleau 28 associé mais on a choisi au contraire que cet axe soit décalé transversalement légèrement en direction de l'autre rouleau 28 de manière que la roue d'éjection 40 chevauche en partie l'espace laissé libre entre les deux rouleaux 28.

Grâce à cette disposition, et compte tenu du sens de rotation de chacune des roues d'éjection 40, les préformes qui sont en appui sur l'un ou l'autre des rouleaux, sans se trouver correctement positionnées dans l'espace prévu à cet effet, sont éjectées directement par la roue d'éjection 40 en direction de l'orifice latéral d'éjection 24. Le sens de rotation des roues est tel que chaque roue 40 éjecte les préformes en direction de l'orifice associé 24 qui est disposé de l'autre côté d'un plan médian de la trémie. Les préformes sont donc éjectées par-dessus l'autre rouleau.

Bien entendu, le diamètre des roues d'éjection 40 et la position exacte des axes A4 et A5 par rapport aux axes A1 et A2 pourra varier en fonction de la forme de la préforme.

Ce second mode de réalisation de l'invention est notamment particulièrement adapté au cas de préformes présentant un col de large diamètre et un longueur relativement faible.

Contrairement à l'art antérieur, la roue d'éjection 40 permet, en éjectant directement toutes les préformes mal orientées, d'éviter une accumulation dans la trémie 18 de préformes mal orientées, accumulation qui, dans les alimentateurs à hautes cadences, provoque de nombreux bourrages.

## Revendications

1. Système d'alimentation de préformes, du type comportant une trémie de démêlage et d'alignement (18) qui est inclinée par rapport à l'horizontale et au fond de laquelle sont disposés deux rouleaux d'alignement (28) sensiblement parallèles entraînés en rotation autour de leur axe respectif (A1 , A2), et du type dans lequel les préformes (32) sont déversées en vrac à l'extrémité supérieure de la trémie (18) et sont récupérées à l'extrémité inférieure de la trémie une fois alignées et orientées entre les deux rouleaux (28),
**caractérisé en ce que** la trémie (18) comporte au moins une roue d'éjection (40) des préformes mal orientées (50) qui est située au-dessus des rouleaux et est entraînée en rotation autour de son axe (A3, A4, A5), lequel axe (A3, A4, A5) s'étend dans un plan parallèle au plan défini par les deux axes (A1 , A2) des deux rouleaux d'alignement (28), lequel axe (A3, A4, A5) est incliné par rapport à une perpendiculaire à la direction des axes (A1 , A2) des rouleaux d'alignement de manière à balayer les préformes mal alignées ou emboîtées (50) et à les éjecter directement vers un orifice latéral d'évacuation (24) de la trémie (18).

2. Système selon la revendication 1, **caractérisé en ce que** la roue d'éjection (40) balaie un espace de la trémie situé au-dessus des rouleaux (28) de manière à ne pas entrer en contact avec des préformes (32) correctement alignées et orientées entre les rouleaux d'alignement (28).

3. Système selon l'une quelconque des revendications précédentes, **caractérisé en ce que** la roue d'éjection (40) comporte des éléments radiaux souples qui sont destinés à venir au contact des préformes (50) mal alignées ou emboîtées.

4. Système selon la revendication 3, **caractérisé en ce que** les éléments radiaux souples sont des pales radiales (44) en matériau souple.

5. Système selon la revendication 3, **caractérisé en ce que** les éléments radiaux souples sont des filaments.

6. Système selon l'une quelconque des revendications précédentes, **caractérisé en ce que** l'axe (A3) de la roue d'éjection (40) est disposé de manière à former un angle sensiblement compris entre 20 et 75° par rapport à la perpendiculaire à la direction des axes (A1 , A2) des rouleaux d'alignement (28).

7. Système selon la revendication 6, **caractérisé en ce que** la roue d'éjection (40) s'étend sur une longueur telle qu'elle balaie transversalement sensiblement toute la largeur couverte par les deux rouleaux (28).

8. Système selon l'une quelconque des revendications 1 à 5, **caractérisé en ce que** l'axe (A4, A5) de la roue d'éjection (40) est disposé de manière à former un angle sensiblement égal à 90° par rapport à la perpendiculaire à la direction des axes (A1, A2) des rouleaux d'alignement (28).

9. Système selon la revendication 8, **caractérisé en ce qu'**il comporte deux roues d'éjection (40) qui sont décalées axialement l'une par rapport à l'autre dans le sens des axes des rouleaux.

10. Système selon la revendication 9, **caractérisé en ce que** la trémie (18) comporte deux orifices latéraux d'éjection (24) dont chacun est associé à une des roues.

11. Système selon l'une quelconque des revendications, 9 ou 10, **caractérisé en ce que** les axes (A4, A5) des deux roues (40) sont sensiblement parallèles et sont décalés transversalement l'un par rapport à l'autre.

12. Système selon l'une quelconque des revendications précédentes, **caractérisé en ce qu'**il comporte des moyens d'ajustement en hauteur de la roue d'éjection (40).

13. Système selon l'une quelconque des revendications précédentes, **caractérisé en ce qu'**il comporte un bac de stockage (14) depuis lequel les préformes sont prélevées pour être déversées dans la trémie (18), et **en ce que** l'orifice latéral d'évacuation (24) de la trémie (18) est relié au bac de stockage (14) par un dispositif de recirculation (22, 48) des préformes qui ramène les préformes éjectées (50) vers le bac de stockage (14).

## Patentansprüche

1. System zur Zuführung von Vorformlingen, von der Art umfassend einen Gleichricht- und Aufstelltrichter (18), der im Verhältnis zur Waagerechten geneigt ist und auf dessen Boden zwei im Wesentlichen parallele Aufstellwalzen (28) angeordnet sind, die um ihre jeweilige Achse (A1, A2) drehbar angetrieben werden, und von der Art, bei der die Vorformlinge (32) lose am oberen Ende des Trichters (18) ausgeschüttet und am unteren Ende des Trichters aufgefangen werden, nachdem sie zwischen den beiden Walzen (28) aufgestellt und orientiert wurden,
**dadurch gekennzeichnet, dass** der Trichter (18) mindestens ein Rad (40) zum Auswerfen der falsch orientierten Vorformlinge (50) umfasst, das sich oberhalb der Walzen befindet und um seine Achse (A3, A4, A5) drehbar angetrieben wird, wobei sich die Achse (A3, A4, A5) in einer Ebene erstreckt, die parallel zu der Ebene ist, die von den beiden Achsen (A1, A2) der beiden Aufstellwalzen (28) definiert wird, wobei die Achse (A3, A4, A5) im Verhältnis zu einer zu der Richtung der Achsen (A1, A2) der Aufstellwalzen Senkrechten derart geneigt ist, dass sie über die falsch aufgestellten oder verschachtelten Vorformlinge (50) geht und diese direkt auf eine seitliche Ablassöffnung (24) des Trichters (18) zu auswirft.

2. System nach Anspruch 1, **dadurch gekennzeichnet, dass** das Auswurfrad (40) über einen Raum des Trichters geht, der sich oberhalb der Walzen (28) befindet, um die richtig zwischen den Aufstellwalzen (28) aufgestellten und orientierten Vorformlinge (32) nicht zu berühren.

3. System nach einem der vorhergehenden Ansprüche, **dadurch gekennzeichnet, dass** das Auswurfrad (40) flexible radiale Elemente umfasst, die dazu gedacht sind, mit den falsch aufgestellten oder verschachtelten Vorformlingen (50) in Berührung zu kommen .

4. System nach Anspruch 3, **dadurch gekennzeichnet, dass** die flexiblen radialen Elemente radiale Schaufeln (44) aus flexiblem Material sind.

5. System nach Anspruch 3, **dadurch gekennzeichnet, dass** die flexiblen radialen Elemente Filamente sind.

6. System nach einem der vorhergehenden Ansprüche, **dadurch gekennzeichnet, dass** die Achse (A3) des Auswurfrads (40) derart angeordnet ist, dass sie einen Winkel bildet, der im Verhältnis zu der zu der Richtung der Achsen (A1, A2) der Aufstellwalzen (28) Senkrechten im Wesentlichen zwischen 20 und 75° liegt.

7. System nach Anspruch 6, **dadurch gekennzeichnet, dass** das Auswurfrad (40) sich derart über eine Länge erstreckt, dass es quergerichtet im Wesentlichen über die gesamte von den beiden Walzen (28) abgedeckte Breite geht.

8. System nach einem der Ansprüche 1 bis 5, **dadurch gekennzeichnet, dass** die Achse (A4, A5) des Auswurfrads (40) derart angeordnet ist, dass sie einen Winkel bildet, der im Verhältnis zu der zu der Richtung der Achsen (A1, A2) der Aufstellwalzen (28) Senkrechten im Wesentlichen 90° beträgt.

9. System nach Anspruch 8, **dadurch gekennzeichnet, dass** es zwei Auswurfräder (40) umfasst, die axial zueinander in Walzenachsenrichtung versetzt sind.

10. System nach Anspruch 9, **dadurch gekennzeichnet, dass** der Trichter (18) zwei seitliche Auswurföffnungen (24) umfasst, von denen jede einem der Räder zugeordnet ist.

11. System nach einem der Ansprüche 9 oder 10, **dadurch gekennzeichnet, dass** die Achsen (A4, A5) der beiden Räder (40) im Wesentlichen parallel und quergerichtet zueinander versetzt sind.

12. System nach einem der vorhergehenden Ansprüche, **dadurch gekennzeichnet, dass** es Mittel zum Einstellen der Höhe des Auswurfrads (40) umfasst.

13. System nach einem der vorhergehenden Ansprüche, **dadurch gekennzeichnet, dass** es einen Lagerbehälter (14) umfasst, aus dem die Vorformlinge entnommen werden, um in den Trichter (18) ausgeschüttet zu werden, und dass die seitliche Ablassöffnung (24) des Trichters (18) mit dem Lagerbehälter (14) über eine Vorrichtung (22, 48) zum Rücklauf der Vorformlinge verbunden ist, welche die ausgeworfenen Vorformlinge (50) in den Lagerbehälter (14) zurückbringt.

## Claims

1. System for supplying preforms, of the type comprising a demingling and alignment hopper (18) which is inclined with respect to the horizontal and at the bottom of which there are two more or less parallel alignment rollers (28) driven in rotation about their respective axis (A1, A2), and of the type in which the preforms (32) are pulled loose into the top end of the hopper (18) and are collected at the bottom end of the hopper once they have been aligned and oriented between the two rollers (28),
**characterized in that** the hopper (18) comprises at least one ejection wheel (40) for ejecting incorrectly orientated preforms (50) and which is situated above the rollers and rotated about its axis (A3, A4, A5), which axis (A3, A4, A5) runs in a plane parallel to the plane defined by the two axes (A1, A2) of the two alignment rollers (28), which axis (A3, A4, A5) is inclined with respect to a normal to the direction of the axes (A1, A2) of the alignment rollers so as to sweep aside the poorly aligned or nested-together preforms (50) and eject them directly towards a side discharge orifice (24) of the hopper (18).

2. System according to Claim 1, **characterized in that** the ejection wheel (40) sweeps a space of the hopper situated above the rollers (28) in such a way as not to come into contact with preforms (32) that have been correctly aligned and orientated between the alignment rollers (28).

3. System according to any one of the preceding claims, **characterized in that** the ejection wheel (40) comprises flexible radial elements which are intended to come into contact with the poorly aligned or nested-together preforms (50).

4. System according to Claim 3, **characterized in that** the flexible radial elements are radial paddles (44) made of flexible material.

5. System according to Claim 3, **characterized in that** the flexible radial elements are filaments.

6. System according to any one of the preceding claims, **characterized in that** the axis (A3) of the ejection wheel (40) is positioned in such a way as to make an angle of more or less between 20 and 75° with respect to the normal to the direction of the axes (A1, A2) of the alignment rollers (28).

7. System according to Claim 6, **characterized in that** the ejection wheel (40) extends over a length such that it transversely sweeps more or less the entire width covered by the two rollers (28).

8. System according to any one of Claims 1 to 5, **characterized in that** the axis (A4, A5) of the ejection wheel (40) is positioned in such a way as to form an angle more or less equal to 90° with respect to the normal to the direction of the axes (A1, A2) of the alignment rollers (28).

9. System according to Claim 8, **characterized in that** it comprises two ejection wheels (40) which are axially offset from one another in the direction of the axes of the rollers.

10. System according to Claim 9, **characterized in that** the hopper (18) comprises two side ejection orifices (24) each of which is associated with one of the wheels.

11. System according to either one of Claims 9 and 10, **characterized in that** the axes (A4, A5) of the two wheels (40) are more or less parallel and are transversely offset from one another.

12. System according to any one of the preceding claims, **characterized in that** it comprises means for adjusting the ejection wheel (40) in the heightwise direction.

13. System according to any one of the preceding claims, **characterized in that** it comprises a storage bin (14) from which the preforms are taken to be tipped into the hopper (18), and **in that** the side discharge orifice (24) of the hopper (18) is connected to the storage bin (14) by a preform recirculation device (22, 48) which returns the ejected preforms (50) to the storage bin (14).
